Europäisches Patentamt

European Patent Office

Office européen des brevets

(11) Veröffentlichungsnummer: **0 276 391 B1**

## EUROPÄISCHE PATENTSCHRIFT

(51) Int. Cl.⁵: **B21D 37/14**, B23Q 3/155

(45) Veröffentlichungstag der Patentschrift: **25.03.92**

(21) Anmeldenummer: **87116844.9**

(22) Anmeldetag: **14.11.87**

(54) **Blechbearbeitungsmaschine mit Werkzeugmagazin.**

(30) Priorität: **23.01.87 DE 3701858**

(43) Veröffentlichungstag der Anmeldung:
**03.08.88 Patentblatt 88/31**

(45) Bekanntmachung des Hinweises auf die
Patenterteilung:
**25.03.92 Patentblatt 92/13**

(84) Benannte Vertragsstaaten:
**CH DE FR GB IT LI**

(56) Entgegenhaltungen:
EP-A- 0 019 200      EP-A- 0 129 866
EP-A- 0 138 122      EP-A- 0 180 823
DE-A- 2 044 183      DE-A- 2 522 654
DE-A- 2 635 003      DE-A- 2 739 010
DE-A- 3 507 220

PATENT ABSTRACTS OF JAPAN, Band 6, Nr.
216 (M-168)[1094], 29. October 1982; & JP-
A-57 121 839 (NITSUSAN SHIYATAI K.K.)
29-07-1982

(73) Patentinhaber: **C. Behrens AG**
**Hackelmasch 1**
**W-3220 Alfeld, Leine(DE)**

(72) Erfinder: **Otto, Gerhard**
**Anemonenweg 1**
**W-3220 Alfeld (Leine)(DE)**
Erfinder: **Tamaschke, Walter**
**Pestalozzistrasse 10**
**W-3220 Alfeld (Leine)(DE)**

(74) Vertreter: **Sobisch, Peter, Dipl.-Ing. et al**
**Patentanwälte Dipl.-Inge. Röse, Kosel & So-**
**bisch Odastrasse 4a Postfach 129**
**W-3353 Bad Gandersheim 1(DE)**

# Beschreibung

Die Erfindung bezieht sich auf eine Stanzmaschine entsprechend dem Oberbegriff des Anspruchs 1. Eine Maschine gemäß dieser Gattung ist aus der DE-A-2 635 003 bekannt.

Stanzmaschinen sind in vielfältiger Form bekannt. Sie dienen insbesondere zum Stanzen und anderen Blechschneidoperationen, wobei hauptsächlich mechanisch arbeitende Schneidwerkzeuge - CNC-gesteuert - zum Einsatz kommen.

Um eine effektive Bearbeitung von in geometrischer Hinsicht komplizierten Blechstücken zu gewährleisten, kommen eine Vielzahl unterschiedlicher Werkzeuge zum Einsatz, so daß derartige Maschinen üblicherweise mit einem Werkzeugmagazin zusammenwirken, aus welchem einzelne Werkzeugsätze in die Arbeitsstation überführbar sind. Die bisher bekannten Maschinensysteme lassen sich im wesentlichen in zwei Gruppen aufteilen, die sich insbesondere hinsichtlich der Werkzeugwechselgeschwindigkeit und des insgesamt für eine Bearbeitung verfügbaren Werkzeugbestandes unterscheiden.

Revolverschneidpressen oder vergleichbare, mit revolvertellerartigen Magazinen versehene Maschinen weisen beispielsweise eine hohe Werkzeugwechselgeschwindigkeit auf, da ein Wechsel des in der jeweiligen Arbeitsstation befindlichen Werkzeugsatzes durch bloßes Weiterdrehen der Revolverteller möglich ist. Jedoch haftet diesen Maschinen der Nachteil einer begrenzten Werkzeugkapazität an, da die Revolverteller aus räumlichen und aus Gewichtsgründen nicht beliebig groß gemacht werden können. Blechbearbeitungsmaschinen, bei denen eine Einzelkopfsstation mit einem externen Werkzeugmagazin zusammenwirkt, haben zwar den Vorteil eines theoretisch sehr großen Werkzeugreservoirs, da das externe Werkzeugmagazin praktisch beliebig groß gemacht werden kann - es muß jedoch jeder einzelne Werkzeugsatz aus dem Magazin entnommen und in die Arbeits- bzw. Einzelkopfstation überführt werden. Somit haftet diesem zuletzt genannten Maschinentyp der Nachteil einer verhältnismäßig geringen Werkzeugwechselgeschwindigkeit an, so daß die auf diesen Maschinen erzielbaren Durchsätze demzufolge begrenzt ausfallen. Es ist in diesem Zusammenhang bekanntgeworden, mehrere Einzelkopfstationen in einer Maschine zusammenzufassen, welches jedoch zu sehr aufwendigen Konstruktionen, insbesondere mit Hinblick auf die Stanzantriebseinrichtungen führt.

Es ist die Aufgabe der Erfindung, eine Stanzmaschine zu schaffen, bei der das Werkzeugmagazin so an die Bauweise des Grundkörpers angeordnet ist, daß das Bauvolumen bzw. der Standflächenbedarf nur unwesentlich vergrößert wird. Ferner soll bei hoher Werkzeugwechselgeschwindigkeit ein im Vergleich zu einer Revolverschneidpresse wesentlich größerer Werkzeugbestand für eine mechanische Bearbeitung zur Verfügung steht. Gelöst ist diese Aufgabe bei einer gattungsgemäßen Stanzmaschine durch die Merkmale des Kennzeichnungsteils des Anspruchs 1. Wesentlich ist somit, daß die Arbeitsstation zwei oder mehr Werkzeugaufnahmen hat, die wahlweise mit dem Werkzeugantrieb kuppelbar sind. Es wird hierbei davon ausgegangen, daß jede Werkzeugaufnahme jeweils zur Aufnahme eines kompletten Werkzeugsatzes bzw. eines sonstigen Werkzeuges eingerichtet ist, wobei von dieser Vielzahl von Werkzeugaufnahmen sich jeweils nur eines im direkten Arbeitseinsatz hinsichtlich eines zu bearbeitenden Werkstückes befindet. Dieses System von zwei oder mehr Werkzeugaufnahmen bildet ein erstes Werkzeugmagazin, mit der Eigenschaft, daß ein Wechsel des mit dem Werkzeugantrieb jeweils verbundenen Werkzeugsatzes durch Verschieben oder Drehen dieses ersten Werkzeugmagazines sehr schnell möglich ist, und zwar zumindest in einer mit der Werkzeugwechselzeit bei Revolvertellern vergleichbaren Zeitspanne. Es wirkt dieses erste Werkzeugsystem mit einem weiteren kettenartigen, umlaufend antreibbaren Werkzeugmagazin zusammen, welches eine Vielzahl kompletter Werkzeugsätze enthält. Mit Hilfe einer Werkzeugwechselvorrichtung sind beliebige Werkzeugsätze aus dem kettenartigen Werkzeugmagazin entnehmbar und in eines der genannten Werkzeugaufnahmen überführbar. Von besonderem Vorteil ist, daß dieser Austausch von Werkzeugsätzen zwischen dem kettenartigen Werkzeugmagazin und den Werkzeugaufnahmen durchgeführt werden kann, während der jeweils eine, mit dem Werkzeugantrieb gekuppelte Werkzeugsatz sich im Arbeitseinsatz befindet. Es wird somit durch den Werkzeugaustausch zwischen den genannten Werkzeugmagazinen der kontinuierliche Ablauf eines Arbeitsprozesses nicht beeinträchtigt. Aufgrund der kettenartigen Ausbildung des genannten zweiten Werkzeugmagazines kann dessen räumliche Anordnung grundsätzlich beliebig gestaltet werden und demzufolge unter Berücksichtigung eines minimalen Bauvolumens, insbesondere einer minimalen Ausladung über die sonstigen Konturen der Maschine hinaus konstruktiv festgelegt werden. Indem das kettenartige Werkzeugmagazin im Bereich der Arbeitsstation auf einer dieser entsprechenden Höhe geführt ist, können die beim Werkzeugwechsel bzw. Austausch zwischen den genannten Magazinen erforderlichen Bewegungen kinematisch einfach gehalten und beschleunigt werden, da keine komplizierten mehrdimensionalen Zustellbewegungen erforderlich sind. Durch den Erfindungsgegenstand werden somit die Vorzüge der Revolverschneidpresse, welche in einem raschen Werkzeugwechsel bestehen, mit den Vorzügen einer Einzelkopfmaschine mit externem Werkzeugmagazin, welche in einem großen Werkzeugreservoir bestehen, kombiniert, wobei die diesen genannten Maschinentypen anhaftenden Nachteile vermieden werden.

Die Unterbringung der Werkzeugaufnahmen auf geradlinig verschiebbaren Schlitten gemäß dem Anspruch 2 stellt eine besonders vorteilhafte Ausführungsform dar, da die zur Durchführung eines Werkzeugwechsels im Bereich des Werkzeugantriebsystems erforderliche Bewegung sehr einfach ausfällt und sehr schnell durchführbar ist. Der Schlitten ist in genau vorgebbaren Positionen arretierbar, welche als Werkzeugwechselpositionen bezeichnet werden können, soweit der in dem jeweiligen Werkzeugaufnahmesystem gehaltene Werkzeugsatz nicht mit dem Werkzeugantriebsystem gekuppelt ist. Es kann jeder Werkzeugwechselposition eine eigene Werkzeugwechselvorrichtung zugeordnet sein, wodurch ein Werkzeugaustausch zwischen den genannten Magazinen besonders schnell durchführbar ist. Es ist darüber hinaus jedoch auch möglich, eine Werkzeugwechselvorrichtung verschiebbar relativ zu den einzelnen Werkzeugwechselpositionen anzuordnen. Die Merkmale des Anspruchs 2 eröffnen außerdem vielfältige Möglichkeiten der Zuordnung von Arretierpositionen des Schlittens relativ zu dem kettenartigen Werkzeugmagazin, und damit der Anordnung von Werkzeugwechseleinrichtungen, welche den jeweiligen Positionen des Schlittens gegenüberliegend angeordnet sind.

Die Handhabungseinrichtungen entsprechend dem Anspruch 4 bestehen aus Paaren von Bolzen, von denen einer undrehbar und der andere drehbar an dem Werkzeugträger gelagert ist. Im Bereich der zu handhabenden Werkzeuge müssen somit lediglich zwei, zur Aufnahme der genannten Bolzen dienende Bohrungen angebracht werden, wobei die eine Bohrung lediglich eine Tragfunktion und die andere Bohrung, welche zur Aufnahme des drehbaren Bolzens eingerichtet ist, neben der Trag- auch eine Arretierungsfunktion übernimmt. Diese Arretierung durch Drehung des drehbaren Bolzens kann formschlüssig durch eine entsprechende Gestaltung des Endbereichs des Bolzens in Verbindung mit einem innerhalb der genannten Bohrung angebrachten Sperrkörper vorgenommen werden.

Die Werkzeuge sind in den Werkzeugaufnahmen des Schlittens gegenüber einem unbeabsichtigten Entfernen arretiert, wobei die unterschiedlichsten Arten von Arretiereinrichtungen zum Einsatz kommen. Zur Durchführung eines Werkzeugwechsels, insbesondere zur Überführung von Werkzeugen bzw. Werkzeugsätzen aus dem Schlitten in das kettenartige Werkzeugmagazin werden diese Arretiereinrichtungen gelöst, wobei eine, das Lösen der Arretiereinrichtung bewirkende Steuerbewegung unmittelbar aus der Bewegung des Schlittens entlang der diesem zugeordneten Führungsschienen abgeleitet werden kann. Es entfallen hierbei somit zusätzliche motorische Antriebe zum Lösen der Arretierungsfunktion.

Die Merkmale des Anspruchs 5 ist im näheren Sinne auf eine Stanzmaschine gerichtet, wobei entsprechend der funktionalen Unterteilung von Ober- und Unterwerkzeug dementsprechend voneinander unabhängige Schlitten und kettenartige Werkzeugmagazine vorgesehen sind, die jeweils unabhängig voneinander verfahrbar sind. Es besteht auf diese Weise eine große Flexibilität beim Werkzeugwechsel, da dementsprechend auch obere und untere Werkzeugträger unabhängig voneinander bewegbar sind.

Die Merkmale des Anspruchs 6 stellen eine Anpassung der Werkzeugaufnahmen der Stanzmaschine an eine solche Ausführungsform dar, deren Werkzeuge um ihre Längsachse in genau vorgebbaren Winkelpositionen relativ zu dem Werkstück feststellar sind. Hier wird davon ausgegangen, daß während der Verschiebung der Werkzeugaufnahmesysteme, insbesondere der diese tragenden Schlitten, das die Drehbewegung um die Längsachse der Werkzeuge bewirkende Antriebsystem abgekuppelt wird.

Die Erfindung wird im folgenden unter Bezugnahme auf die beiliegenden Zeichnungen, welche ein bevorzugtes Ausführungsbeispiel zeigen, näher erläutert werden. Es zeigen:

Fig.1 eine Draufsicht auf die grundsätzlichen Maschinenkomponenten;

Fig. 2 einen Vertikalschnitt der Blechbearbeitungsmaschine entsprechend Fig. 1 in einer Ebene II-II;

Fig. 3 einen Vertikalschnitt der Blechbearbeitungsmaschine entsprechend Fig. 1 in einer Ebene III-III;

Fig. 4 eine Horizontalschnittdarstellung entsprechend der Schnittebene IV-IV der Fig. 2;

Fig. 5 eine der Fig. 2 entsprechende Darstellung, welche das Zusammenwirken der Bauelemente beim Werkzeugwechsel zeigt.

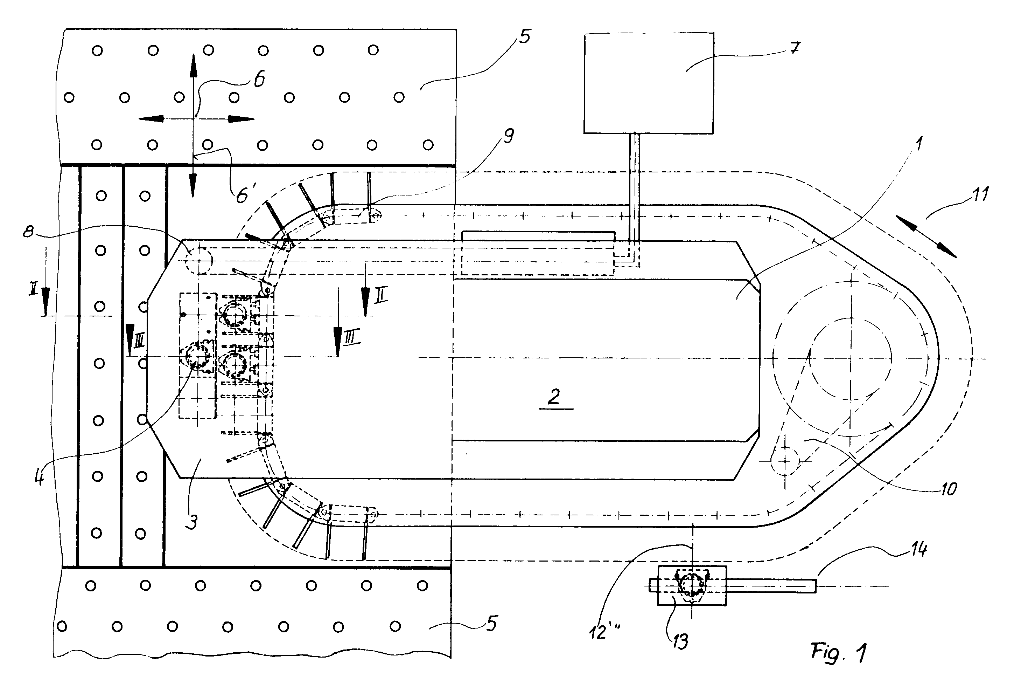

Mit 1 ist in Fig. 1 eine Stanzmaschine bezeichnet, deren Grundkörper 2 von C-förmiger Gestalt ist und an seinem offenen Endbereich 3 eine Stanzstation 4 trägt. Die Blechbearbeitungsmaschine 1 wirkt mit einem an sich bekannten Koordinatentisch 5 zusammen, über den die zu bearbeitenden Blechstücke in Richtung der Pfeile 6 durch die Stanzstation 4 hindurch transportiert werden. In der Stanzstation, deren konstruktiver Aufbau im folgenden noch zu beschreiben sein wird, erfolgt die mechanische Bearbeitung des Werkstückes mittels eines Werkzeugsatzes, von dem sich ein Oberwerkzeug oberhalb der Ebene des Blechstückes und ein Unterwerkzeug unterhalb der Ebene des Blechstückes befindet.

Mit 7 ist ein Lasergenerator bezeichnet und mit 8 die diesem zugeordnete thermische Schneideinrichtung, wodurch die mechanische Bearbeitungsmöglichkeit in der Stanzstation ergänzt wird. Die thermische Schneideinrichtung 8 befindet sich in der Nähe der Stanzstation 4.

Mit 9 ist ein Werkzeugmagazin bezeichnet, welches aus zwei übereinander angeordneten Kettenzügen besteht und umfangsseitig eine Vielzahl von kompletten Werkzeugsätzen, bestehend jeweils aus einem Ober- und einem Unterwerkzeug trägt. Das Werkzeugmagazin 9 ist hinsichtlich des C-förmigen Grundkörpers 2 umlaufend in einer besonderen Führungseinrichtung gehalten, welche letztere im folgenden ebenfalls noch näher erläutert werden wird. Das Werkzeugmagazin 9 ist zwecks Durchführung eines Werkzeugwechsels an der Stanzstation 4 vorbeigeführt und steht mit einem Antriebssystem 10 in Wirkverbindung. Das Antriebssystem 10 kann als eine beliebige Motor-Getriebeeinheit ausgebildet sein, durch welche das Kettenmagazin in einer Horizontalebene in Richtung der Pfeile 11 mit einer geeigneten Geschwindigkeit antreibbar ist.

Mit 12 ist eine im Bereich der Führung des Kettenmagazins 9 angeordnete Station zur Entnahme bzw. zum Einsetzen von Werkzeugsätzen in das Werkzeugmagazin 9 bezeichnet. Diese Station 12 dient dem weitgehend automatisierten Überführen von Werkzeugsätzen aus dem Werkzeugmagazin 9 auf einen Transportwagen 13, der entlang einer Führungsschiene 14 in Richtung auf ein zeichnerisch nicht dargestelltes Werkzeuglager hin motorisch verfahrbar angeordnet ist. Der Transportwagen 13 ist mit geeigneten, den Werkzeugsätzen zugeordneten Handhabungseinrichtungen versehen, welche im wesentlichen denjenigen entsprechen, die auch beim Werkzeugwechsel in der Stanzstation 4 eingesetzt sind. In Verbindung mit einem Werkzeuglager, welches mit entsprechenden, einen automatischen Betrieb ermöglichenden Handhabungseinrichtungen ausgerüstet ist, steht somit für den Bearbeitungsvorgang eines Werkstücks ein theoretisch beliebig vergrößerbares Werkzeugreservoir zur Verfügung.

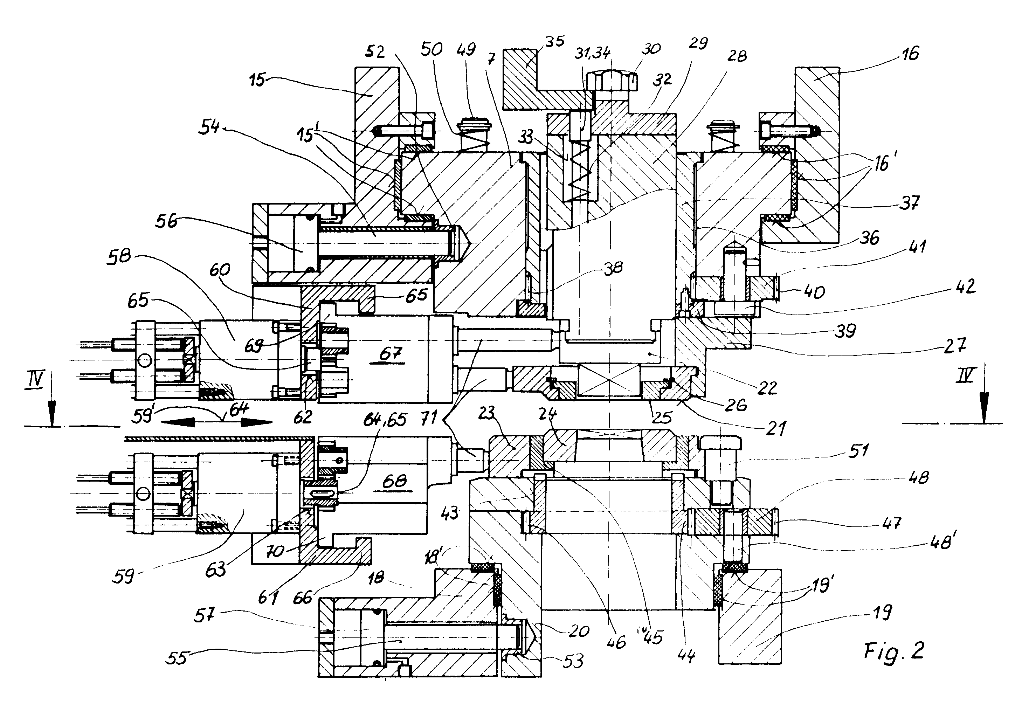

Erfindungswesentlich ist, daß die Horizontalführung des Werkzeugmagazins 9 an die Bauweise des Grundkörpers 2 angepaßt ist, so daß das Bauvolumen bzw. der Standflächenbedarf der Blechbearbeitungsmaschine nur unwesentlich vergrößert werden. Die in dem Kettenmagazin gehaltenen Werkzeugsätze können in der Stanzstation 4 in einen in horizontaler Richtung parallel zu dem Pfeil 6′ verfahrbaren, schlittenartigen Stanzblocküberführt werden, welche zumindest zwei Aufnahmeeinrichtungen für jeweils einen kompletten Werkzeugsatz aufweist, wobei eine dieser Aufnahmeeinrichtungen in einer Position sein kann, in welcher sie sich im Arbeitseinsatz befindet und demzufolge mit dem Maschinenstößel zusammenwirkt, während die andere Aufnahmeeinrichtung für einen Werkzeugsatzaustausch zur Verfügung steht. Wesentlich ist hierbei, daß der Austausch des in der einen Aufnahmeeinrichtung befindlichen Werkzeugsatzes durchgeführt werden kann, während gleichzeitig der jeweils andere Werkzeugsatz sich im Arbeitseinsatz befindet. Anhand der Fig. 2 bis 5, in welchen Funktionselemente, die mit denjenigen der Fig. 1 übereinstimmen, übereinstimmend beziffert sind, wird im folgenden der konstruktive Aufbau der Stanzstation sowie der an dem Werkzeugwechsel beteiligten Komponenten näher erläutert werden.

Mit 15, 16 sind in Fig. 2 Führungsschienen bezeichnet, die an dem Grundkörper 2 befestigt sind und sich quer zu diesem, d.h. parallel zu dem Pfeil 6 (Fig. 1) erstrecken. Diese Fuhrungsschienen 15, 16 weisen jeweils Führungsflächen 15′, 16′ auf, mittels welchen ein oberer Stanzblock 17 geführt ist. Die konstruktive Ausbildung der Gleitflächen ist beliebig - es kann sich hierbei um reine Gleitflächen handeln, es kommen jedoch auch entsprechende Wälzlagerungen in Betracht. Der Stanzblock 17 ist somit senkrecht zur Zeichenebene der Fig. 2 geradlinig verfahrbar bzw. verschiebbar.

In ähnlicher Weise sind Führungsschienen 18, 18 vorgesehen, die der Führung eines unteren Stanzblockes 20 dienen. Die Führung erfolgt auch hier an beiden Führungsschienen 18, 19 über entsprechende Führungsflächen 18′, 19′, die sich jeweils parallel zu den Führungsflächen 15′, 16′ erstrecken, so daß beide Stanzblöcke entlang zueinander paralleler Führungen verschiebbar sind.

Die Stanzblöcke 17, 20 dienen der Aufnahme des jeweiligen Ober- bzw. des Unterwerkzeugs eines kompletten Werkzeugsatzes. Das an einem Werkzeugwechselvorgang teilnehmende Oberwerkzeug besteht aus dem Abstreifer 21 sowie dem Stempel 22, während das an diesem Vorgang teilnehmende Unterwerkzeug aus dem Matrizenschuh 23 mit eingesetzter Matrize 24 besteht. Mit 25 ist ein Abstreiferring bezeichnet, der über einen Flanschring formschlüssig zwischen einer Ringfläche des Abstreifers und einem Sicherungsring 26 arretiert ist. Der Abstreifer ist in an sich bekannter Weise in einen Abstreiferschuh 27 eingesetzt, und zwar derart, daß ein horizontales Entfernen aus dem Abstreiferschuh 27 möglich ist.

Mit 28 ist der dem Stempel 22 zugeordnete Stempelhalter bezeichnet, dessen oberer Abschluß durch einen Stempelhalterdeckel 29 gebildet wird, an welchem ein Haltekopf 30 befestigt ist, der unmittelbar in an sich bekannter Weist mit dem Maschinenstößel der Blechbearbeitungsmaschine zur Durchführung eines Stanzvorganges kuppelbar ist.

Mit 31 ist in Fig. 2 ein Arretierstift bezeichnet, der der Fixierung des Stempels 22 gegenüber dem Stempelhalter 28 dient. Der Stempel 22 ist zu diesem Zweck in seinem oberen Bereich mit einer nicht näher dargestellten Aufnahme, z.B. Bohrung versehen, in welche der Arretierstift 31 eingreift. Der Arretierstift ist im übrigen mittels einer Feder 32 in einer Bohrung 33 des Stempelhalters abgestützt, wobei die Feder 32 an einem Ende an dem Stempelhalter 28 und an ihrem anderen Ende an dem Kopfteil 34 des Arretierstiftes anliegt. Das Kopfteil 34 durchdringt ein Stempelhalterdeckel 29 und liegt an der Unterseite einer, dem Haltekopf 30 untergreifenden, an dem Grundkörper 2 der Stanzmaschine angebrachten Stempelhalterleiste 35 an. Die Stempelhalterleiste 35 erstreckt sich parallel zu den Führungsschienen 15, 16.

Der Stempelhalter 28 ist innerhalb einer, in einer Bohrung 36 des Stanzblockes 17 drehbar aufgenommenen Buchse 37 angeordnet. Eine Verdrehung des Stempelhalters 28 gegenüber der Buchse 37 wird mittels herkömmlicher Mittel, beispielsweise einer Nut-Feder-Verbindung verhindert. Die Buchse ist in ihrem oberen Endbereich mit einem der Lagerung an dem Stanzblock 17 dienenden Ringflansch versehen und trägt an ihrem unteren Endbereich eine außenseitige Verzahnung 38. Den unteren Abschluß der Buchse 37 bildet ein Deckel 39, der über eine Schraubverbindung an die Buchse 37 angeschlossen ist. Die Verzahnung 38 steht mit der Verzahnung 40 eines Zwischenrades 41 in Verbindung, welch letzteres auf einer sich parallel zur Achse des Stempelhalters 28 erstreckenden Achse 42 in dem Stanzblock 17 drehbar gelagert ist. Das Zwischenrad 41 steht mit einem noch näher zu beschreibenden Antrieb in Wirkverbindung.

Der untere Stanzblock 20 ist mit einer Bohrung 43 versehen, in welche eine Buchse 44 drehbar eingesetzt ist, wobei diese Buchse mit einem Aufnahmering 45, innerhalb welchem die Matrize 24 unverdrehbar eingesetzt ist, in formschlüssigem Eingriff steht. Es ist somit der Aufnahmering 45 gegenüber dem Matrizenschuh 23 drehbar gelagert. Die Buchse 44 trägt an ihrem unteren Endbereich eine außenseitige Verzahnung 46, die mit der Verzahnung 47 eines Zwischenrades 48 im Eingriff steht. Das Zwischenrad 48 ist auf einer sich parallel zur Achse der Matrize 24 erstreckenden Achse 48′ in dem unteren Stanzblock 20 drehbar gelagert und steht mit einem im folgenden noch zu beschreibenden Antrieb in Wirkverbindung.

Mittels in die Zwischenräder 41, 48 eingeleiteter definierter Drehbewegungen können somit die Matrize 24, der Abstreiferring 25 sowie der Stempel 22 gedreht werden.

Mit 49 sind Abstreiferbolzen bezeichnet, an denen der Abstreiferschuh 27 befestigt ist und welche ihrerseits über Federelemente 50 an der Oberseite des Stanzblockes 17 abgestützt sind. Auf eine nähere Beschreibung der Wirkungsweise dieser an sich bekannten Abstreiferbolzen 49 wird im folgenden jedoch verzichtet.

Mit 51 ist ein Fixierbolzen bezeichnet, der in noch zu beschreibender Weise mit dem Matrizenschuh 23 formschlüssig im Eingriff steht und somit dessen Arretierung dient.

Die zeichnerische Darstellung gemäß Fig. 2 zeigt die Stanzblöcke 17, 20 in einer Position, welche als Werkzeugwechselstation bezeichnet werden kann. Wie bereits ausgeführt, enthalten die Stanzblöcke 17, 20 zwei nebeneinander angeordnete Aufnahmen für Werkzeugsätze, worauf im folgenden jedoch noch näher einzugehen sein wird. Die Stanzblöcke 17, 20 sind seitlich jeweils mit Arretierbuchsen 52, 53 versehen, welche in entsprechende Bohrungen eingesetzt sind. Diese Arretierbuchsen 52, 53 wirken mit Kolbenstangen 54, 55 zweier Arretierzylinder 56, 57 zusammen, deren Kolben beidseitig mit einem Druckmedium beaufschlagbar sind. Die Arretierzylinder 56, 57 sind an den Führungsschienen 15, 18 befestigt und dienen der Fixierung der Stanzblöcke 17, 20 in der in Fig. 2 gezeigten Werkzeugwechselstation.

Mit 58, 59 ist jeweils eine obere und eine untere Werkzeugwechselvorrichtung bezeichnet. Die Werkzeugwechselvorrichtungen, deren Aufbau im einzelnen noch zu beschreiben sein wird, sind am Grundkörper 2 der Blechbearbeitungsmaschine in Richtung der Pfeile 59′ verschiebbar gelagert. Sie enden an ihrem der Werkzeugseite zugekehrten Ende jeweils in Platten 60, 61, welche jeweils eine Bohrung 62, 63 zur Durchführung einer jeweils ein Ritzel 64 tragenden Welle 65 aufweisen. Die Platte 60 ist darüber hinaus an ihrem oberen Ende mit einem sich in Richtung auf das Werkzeug hin erstreckenden Abschnitt versehen, der in einem hinsichtlich seiner Wirkung noch zu erläuternden Mitnahmeteil 65 endet. Die Platte 61 ist ähnlich gestaltet und endet auf ihrem dem Werkzeug zugekehrten Ende ebenfalls in einem Mitnahmeteil 66. Die winkelartigen Mitnahmeteile 65, 66 erstrecken sich mit Abstand parallel zu den Ebenen der Platten 60, 61.

Mit 67 ist ein oberer und mit 68 ein unterer Werkzeugträger bezeichnet, welche an ihrem, den Platten 60, 61 zugekehrten Enden jeweils mit einem, mit dem jeweiligen Mitnahmeteil 65, 66 in Eingriff bringbaren Nocken 69, 70 versehen sind. Die Werkzeugträger 67, 68 weisen eine den Platten 60, 61 zugekehrte ebene Begrenzungsfläche auf, die in die diesbezügliche Begrenzungsfläche der Nocken 69, 70 bündig übergeht.

Die Werkzeugträger 67, 68 sind in noch zu erläuternder Weise an den Gliedern des jeweiligen oberen bzw. des unteren Kettenmagazin in Richtung der Pfeile 59' gleitfähig abgestützt. Die Werkzeugträger tragen an ihrem, dem zu handhabenden Werkzeug zugekehrten Ende Bolzen 71, die zum unmittelbaren Eingriff in das jeweils auszuwechselnde Werkzeug, nämlich den Abstreifer 21 mit Stempel 22 und mit dem Matrizenschuh 23 einschließlich der Matrize 24 ausgebildet sind. Die Stifte 71 sind teilweise undrehbar, teilweise jedoch drehbar an dem Werkzeugträger 67, 68 gelagert, wobei eine Drehbewegung in noch zu erläuternder Weise über das jeweilige Ritzel 64 der Werkzeugwechselvorrichtung 59 eingeleitet wird.

Hierauf wird im folgenden noch näher eingegangen werden.

Wesentlich ist, daß durch Verschiebung der Platten 60, 61 der Werkzeugwechselvorrichtungen 58, 59 die Werkzeugträger 67, 68 in Richtung auf das auszuwechselnde Werkzeug hin verschoben werden können, wobei die in Richtung auf das Werkzeug hin erfolgende Verschiebebewegung durch Anlegen der dem Werkzeug zugekehrten Begrenzungsfläche der Platten 60, 61 einerseits an die diesen zugekehrten Flächen der Werkzeugträger 67, 68 zustande kommt, wohingegen die entgegengesetzt gerichtete Verschiebebewegung der Werkzeugträger 67,68 durch entgegengerichtete Verschiebung der Platten 60, 61 erzielt wird, wobei nunmehr die Mitnahmeteile 65, 66 mit den Nocken 69, 70 in Eingriff gelangen und auf diese Weise die Werkzeugträger 67, 68 zurückgezogen werden. Die noch zu beschreibenden Antreibseinrichtungen der Werkzeugwechselvorrichtungen 58, 59 sind unabhängig voneinander betätigbar. Man erkennt aus der vorangegangenen Darstellung in Verbindung mit der Zeichnungsfigur 2, daß der formschlüssige Eingriff zwischen dem Aufnahmering 45 und der Buchse 44 derart beschaffen sein muß, daß eine Entfernung des Matrizenschuhes 23 nebst Aufnahmering 45 und Matrize 24 in Richtung der Pfeile 59' möglich ist.

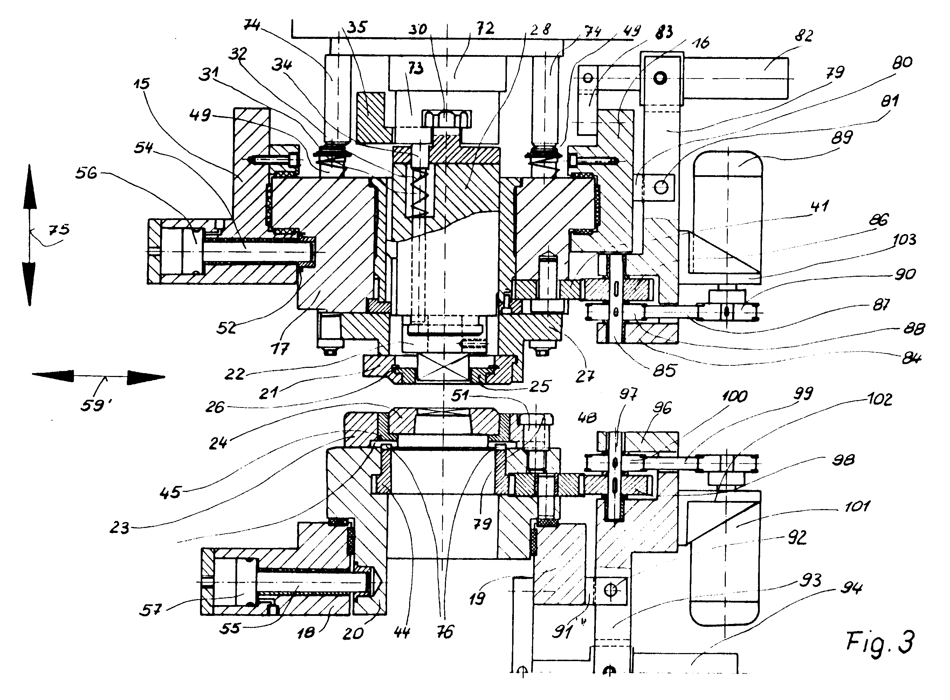

Fig. 3 zeigt die Stanzblöcke 17, 20 in der Stanzstation 4 der Stanzmaschine. Es wird in diesem Fall der Haltekopf 30 in einem, an dem Maschinenstößel 72 befestigten Adapterteil 73 formschlüssig aufgenommen. Das Adapterteil 73 liegt gleichzeitig auf der Oberseite des Kopfteils 34 des Arretierstiftes 31 auf. Mit 74 sind Betätigungsstifte bezeichnet, deren Vertikalbewegung in Richtung der Pfeile 75 mit der Bewegung des Maschinenstößels 72 verknüpft ist. Die Betätigungsstifte 74 erstrecken sich parallel zu den Abstreiferbolzen 49 und liegen auf deren Oberseite auf. Es findet somit über die Betätigungsstifte 74 und die Abstreiferbolzen 49 während jedes Hubes des Maschinenstößels 72 eine entsprechende Bewegung des Abstreiferschuhes 27 und damit auch des Abstreifers 21 statt.

Mit 76 sind Zapfen bezeichnet, die auf einander diametral gegenüberliegenden Enden der Buchse 44 aus deren oberer Begrenzungsebene heraus und in entsprechende, in den Matrizenschuh 23 sowie den Aufnahmering 45 eingeformte Nuten 77 hineinragen. Auf diese Weise wird eine grundsätzliche Verschiebbarkeit der aus dem Matrizenschuh 23, dem Aufnahmering 45 und der Matrize 24 bestehenden Funktionseinheit in Richtung der Pfeile 59' gewährleistet, wobei gleichzeitig jedoch eine verdrehstarre Verbindung zwischen der Buchse 44 und dem Aufnahmering 45 herstellbar ist.

Man erkennt, daß durch den Fixierbolzen 51 die in Richtung der Pfeile 59' erfolgende Verschiebebewegung des Matrizenschuhes 23 begrenzt wird. Der Matrizenschuh 23 weist an seinem, dem Fixierbolz 51 zugekehrten Ende eine ungefähr halbkreisförmige Ausnehmung auf, welche in der in Fig. 3 gezeigten Position den Fixierbolzen teilweise umgibt. Gleichzeitig findet eine teilweise Überdeckung einer oberseitigen Ausnehmung des Matrizenschuhes 23 durch das Kopfteil 79 des Fixierbolzens statt, so daß auch eine Fixierung des Matrizenschuhes 23 in einer Richtung senkrecht zu derjenigen der Pfeile 59' stattfindet. Der Fixierbolzen 51 ist in den Stanzblock 20 im übrigen eingeschraubt.

Der Stempel 22 und der Abstreifer 21 sind ebenfalls in Richtung der Pfeile 59' verschiebbar an dem Stempelhalter 28 bzw. dem Abstreiferschuh 27 befestigt, so daß eine Entnahme dieser beiden Teile des Oberwerkzeugs bzw. ein Einsetzen in Richtung der Pfeile 59' möglich ist. Eine Arretierung hinsichtlich einer unbeabsichtigten Bewegung dieser beiden Werkzeugkomponenten in Richtung der Pfeile 59' kann in grundsätzlich beliebiger Weise, vorzugsweise formschlüssig erfolgen. Dies geschieht im vorliegenden Fall durch den Arretierstift 31, der durch das Adapterteil 73 entgegen der Kraft der Feder 32 in Richtung auf den Stempel 22 hin gedrückt und hierbei mit einer Bohrung im oberen Teil des Stempels in Eingriff gelangt. Für den Abstreifer 21 ist keine insbesondere Arretierung notwendig, da der untere Teil des Stempels nur ein sehr geringes Spiel zu dem Abstreiferring 25 aufweist.

Mit 79 ist ein Hebel bezeichnet, der um eine, mittels einer Konsole 80 an der Führungsschiene 16 befestigten, sich senkrecht zur Zeichenebene der Fig. 3 erstreckende Achse 81 drehbar gelagert ist. Die Drehbewegung erfolgt mittels einer Kolben-Zylinder-Einheit 82, deren Kolben an dem Hebel 79 und deren Kolbenstange an einem Zwischenbauteil 83 an der Führungsschiene 16 gelenkig befestigt sind. Die Kolben-Zylinder-Einheit 82 ist beidseitig mit einem Druckmedium beaufschlagbar.

Der zweiseitige Hebel 79 trägt auf seinem, der Kolben-Zylinder-Einheit 82 abgekehrten Ende ein gabelartiges Lagerteil 84, welches eine Welle 85 aufnimmt, die sich parallel zu dem Hebel 79 erstreckt. Die Welle 85 trägt ein Zahnrad 86, dessen Verzahnung mit dem Zwischenrad 41 im Eingriff steht. Gleichzeitig trägt die Welle ein weiteres Zahnrad 87, welches über einen Zahriemen 88 mit einem weiteren, auf der Abtriebswelle eines Motors 89 befindlichen Zahnrades 90 in Wirkverbindung steht. Der Motor 89 in Verbindung mit dem genannten Zahnriemengetriebe bilden somit ein Antriebssystem für eine Schwenkbewegung der Buchse 37 und damit des Stempels 22 in Verbindung mit dem Abstreiferring 25. Der Eingriff zwischen dem Zahnrad 86 und dem Zwischenrad 41 kann durch Betätigung der Kolben-Zylinder-Einheit 82 und der hiermit verbundenen Schwenkbewegung um die Achse 81 gelöst werden, so daß eine Verschiebung des Stanzblockes 17 entlang der Führungsschienen 15, 16 senkrecht zur Zeichenebene der Fig. 3 ohne Behinderung durch den Motor 89 möglich ist.

An der Führungsschiene 19 ist über eine Konsole 91 und eine von dieser getragenen Achse 92 ein weiterer Hebel 93 senkrecht zur Zeichenebene der Fig. 3 schwenkbar gelagert. Der Hebel 93 ist ebenfalls als zweiseitiger Hebel ausgebildet und steht an seinem einen Ende mit einer Kolben-Zylinder-Einheit 94 in Wirkverbindung, deren Kolbenstange an einem, an der Führungsschiene 19 befestigten Zwischenbauteil und deren Zylinder an dem Hebel 93 gelenkig befestigt ist. Der Hebel 93 trägt an seinem, der Kolben-Zylinder-Einheit 94 abgekehrten Ende ein gabelförmiges Lagerteil 96, in welchem eine Welle 97 gelagert ist, welche ein mit dem Zwischenrad 48 kämmendes Zahnrad 98 und ein weiteres, mit einem Zahnriemen 99 im Eingriff stehendes Zahnrad 100 trägt. Der Zahnriemen 99 steht im übrigen mit dem auf der Abtriebswelle eines Motors 101 getragenen weiteren Zahnrades 102 im Eingriff. Auch hier bilden der Motor 101 in Verbindung mit dem beschriebenen Zahnriemengetriebe eine Antriebssystem für eine Drehbewegung der Buchse 44 und damit der Matrize 24. Die Motoren 89, 101 sind jeweils über besondere Konsolen 102, 103 an den Hebeln 79, 93 befestigt. Für die beschriebene Drehbewegung der Werkzeuge werden solche Motoren eingesetzt, die eine entsprechend feinstufige Drehwinkelsteuerung ermöglichen. Zeichnerisch nicht dargestellt sind Meßsysteme, durch welche die Drehbewegung der Werkzeuge erfaßt und über entsprechende Regelkreise zur Steuerung der Motoren benutzt werden.

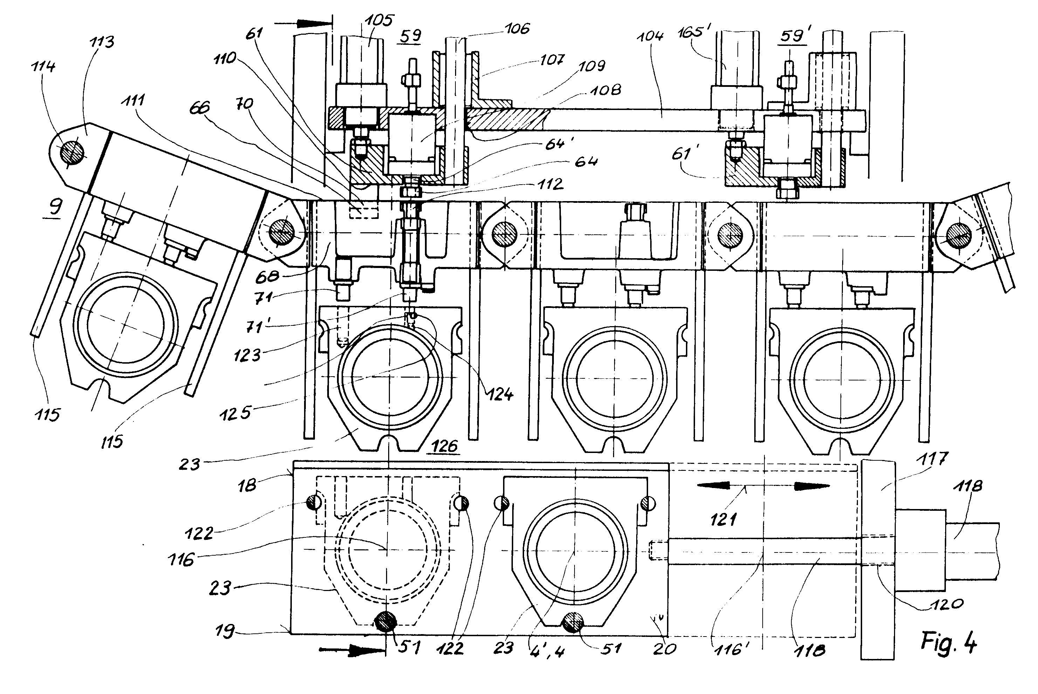

Mit 104 ist in Fig.4 eine am Grundkörper 2 der Stanzmaschine befestigte Zwischenwand bezeichnet, welche als Trägerwand für die Werkzeugwechselvorrichtungen 59 dient. Aufgrund der großen Ähnlichkeiten der unteren und oberen Werkzeugwechselvorrichtungen wird im folgenden lediglich die untere Werkzeugwechselvorrichtung nebst zugehörigen Funktionselementen beschrieben.

Die Werkzeugwechselvorrichtung 59 besteht im einzelnen aus einer Kolben-Zylinder-Einheit 105, deren Zylinder an der Zwischenwand 104 und deren Kolben an der Platte 61 befestigt ist. Mit 106 ist eine Führungsstange bezeichnet, welche innerhalb eines Lagerzylinders 107 sowie einer Bohrung 108 der Zwischenwand 104 gleitend gelagert ist. Der Lagerzylinder 107 ist an der Zwischenwand 104 in nicht näher dargestellter Weise befestigt. Die Führungsstange steht im übrigen mit der Platte 61 in fester Verbindung.

Die Platte 61 trägt darüber hinaus als Drehantrieb einen Drehzylinder 109, der beidseitig mit einem Druckmedium beaufschlagbar ist und somit sowohl einen Rechts- als auch einen Linkslauf erlaubt. Auf der Abtriebswelle des Drehzylinders befindet sich das Ritzel 64. Wie bereits dargestellt,kann die Vorderfläche 110 der Platte 61 durch Betätigung der Kolben-Zylinder-Einheit 105 in Anlage an die Gegenfläche 111 des Werkzeugträgers 68 gebracht werden, wobei gleichzeitig das Ritzel 64 mit einem Zahnrad 112 in Eingriff gelangt, welches mit dem einen Bolzen 71' des Werkzeugträgers 68 in Verbindung steht. Es ist dieser eine Bolzen 71'somit drehbar an dem Werkzeugträger 68 gelagert, während der andere Bolzen 71, welcher sich mit Abstand und parallel zu dem Bolzen 71' erstreckt, unverdrehbar an dem Werkzeugträger 68 angebracht ist. Durch Betätigung des Drehzylinders 109 kann somit eine Drehbewegung auf den Bolzen 71' übertragen werden. Beide Bolzen 71, 71' befinden sich im übrigen in einer gemeinsamen Horizontalebene.

Mit 113 sind einzelne Glieder des unteren Werkzeugmagazins bezeichnet, die durch Bolzen 114 untereinander in Verbindung stehen. Die Führung dieser Kettenglieder 13 wird im folgenden noch näher erläutert werden. Jedem Kettenglied sind ein Paar sich parallel mit Abstand zueinander erstreckender Leisten 115 zugeordnet, welche als Führung für einen Werkzeugträger 68 dienen.

Auf der Zwischenwand 104 sind zwei Werkzeugwechselvorrichtungen 59 angeordnet, welche sich in einem genau vorherbestimmten seitlichen Abstand auf gleicher horizontaler Höhe befinden, worauf im folgenden ebenfalls noch eingegangen werden wird.

Das Werkzeugmagazin 9 ist in genau definierten Positionen relativ zu den Werkzeugwechselvorrichtungen 59 anhaltbar angetrieben.

Mit 4' ist der Mittelpunkt der Stanzstation 4 bezeichnet, wobei im vorliegenden Fall davon ausgegangen wird, daß sich gerade ein Werkzeugsatz in der Stanzstation 4 befindet. Man erkennt, daß sich in dem unteren Stanzblock 20 zwei praktisch identische Werkzeugaufnahmevorrichtugnen nebeneinander befinden. Die dem Stanzblock zugeordneten Führungsschienen 18, 19 sind in ihrer Länge derart bemessen, daß beiderseits der zentralen Stanzstation sich Werkzeugwechselstationen ergeben, deren jeweils Mittelpunkte mit 116, 116' bezeichnet sind. Es sind die seitlichen Abstände der Mittelpunkte 116, 116 der Mittelpunkte der Wechselstationen auf die entsprechenden seitlichen Abstände der Werkzeugwechselvorrichtungen 59, 59' abgestimmt.

Mit 117 ist eine am Grundkörper 2 befestigte Außenwandung bezeichnet, auf welcher eine Kolben-Zylinder-Einheit 118 angebracht ist. Der Zylinder dieser Kolben-Zylinder-Einheit ist unmittelbar an der Außenwandung 117 befestigt, während davon Kolbenstange 119 eine Bohrung 120 der Außenwand durchdringt und unmittelbar an dem Stanzblock 20 befestigt ist. Die Befestigung der Kolbenstange 119 an dem Stanzblock 20 kann beispielsweise über eine Gewindeverbindung erfolgen. Mann erkennt, daß durch Betätigung der beidseitig mit einem Druckmedium beaufschlagbaren Kolben-Zylinder-Einheit 118 der Stanzblock 20 in Richtung der Pfeile 121 bewegt werden kann, so daß jeder der beiden gezeigten Werkzeugaufnahmesyteme in die Stanzstation 4 überführt werden kann, während sich das jeweils andere Werkzeugaufnahmesystem in einer solchen Position befindet, in welcher es für einen mittels einer der beiden Werkzeugwechselvorrichtungen 59,59' durchzuführenden Werkzeugwechsel zur Verfügung steht.

Mit 122 sind beiderseits des in dem Stanzblock 20 befindlichen Matrizenschuhes 23 angeordnete, um 180° drehbare Arretierstifte bezeichnet, in deren einer Drehstellung der Matrizenschuh 23 gegenüber dem Stanzblock 20 arretiert ist und in deren anderer Drehstellung eine Entnahme des Matrizenschuhes 23 aus dem Stanzblock möglich ist. Diese Arretierstifte 122 können mit zeichnerisch nicht dargestellten Drehantrieben in Verbindung gebracht werden.

Der formschlüssige Eingriff dieser Arretierstifte 122 mit der Umrandung des Matrizenschuhes kann konstruktiv grundsätzlich beliebig gestaltet sein.

Mit 123, 124 sind mit Abstand und parallel zueinander verlaufende Bohrungen in dem Matrizenschuh 23 bezeichnet, welche mit den Bolzen 71, 71' zusammenwirken. Die Bohrung 124 ist mit einem sich quer zu dieser erstreckenden Stift 125 versehen, der der formschlüssigen Erfassung des Matrizenschuhes durch die Werkzeugwechselvorrichtung 59 insbesondere den drehbaren Bolzen 71' dient. Es ist zu diesem Zweck der Endbereich des Bolzens 17' unsymmetrisch ausgebildet, d.h. an einer Seite abgeplattet und auf dem, der abgeplatteten Seite abgekehrten Umfangsbereich mit einer im Querschnitt kreisabschnittförmigen Eindrehung versehen, deren Radius ungefähr demjenigen des Stiftes 125 entspricht. Die Abplattung und der Stift 125 sind im übrigen derart bemessen, daß in der einen Drehstellung des Bolzens 71' dieser in die Bohrung 124, und zwar an dem Stift 125 vorbei eingeführt werden kann, wobei während der Überführung des Bolzens 71' in dessen zweite Drehendstellung der Stift 125 mit der genannten kreisabschnittförmigen Eindrehung in Eingriff gelangt, womit eine formschlüssige Verbindung zwischen dem Bolzen 71' und dem Matrizenschuh 23 hergestellt ist. Es erfüllt somit der Bolzen 71' eine Arretier- und eine Tragfunktion, während der andere Bolzen 71 lediglich eine Tragfunktion erfüllt.

Man erkennt, daß in der in Fig. 4 gezeigten Konfiguration das in der Stanzstation 4 befindliche Werkzeug im Arbeitseinsatz sein kann, während gleichzeitig das in dem Werkzeugmagazin 9 gehaltene Werkzeug, welches sich in der Position 126 befindet, mittels der Werkzeugwechselvorrichtung 59 dem Stanzblock 20 zugeführt werden kann und dabei in die gestrichelt wiedergegebene Position gelangt. Es ist gleichzeitig erkennbar, daß ein Auswechseln des sich in der Stanzstation 4 befindlichen Werkzeugsatzes durch den sich in der Position 23' befindlichen Werkzeugsatzes durch Verschiebung des Stanzblockes 20 in Richtung der Pfeile 121 in kürzester Zeit möglich ist.

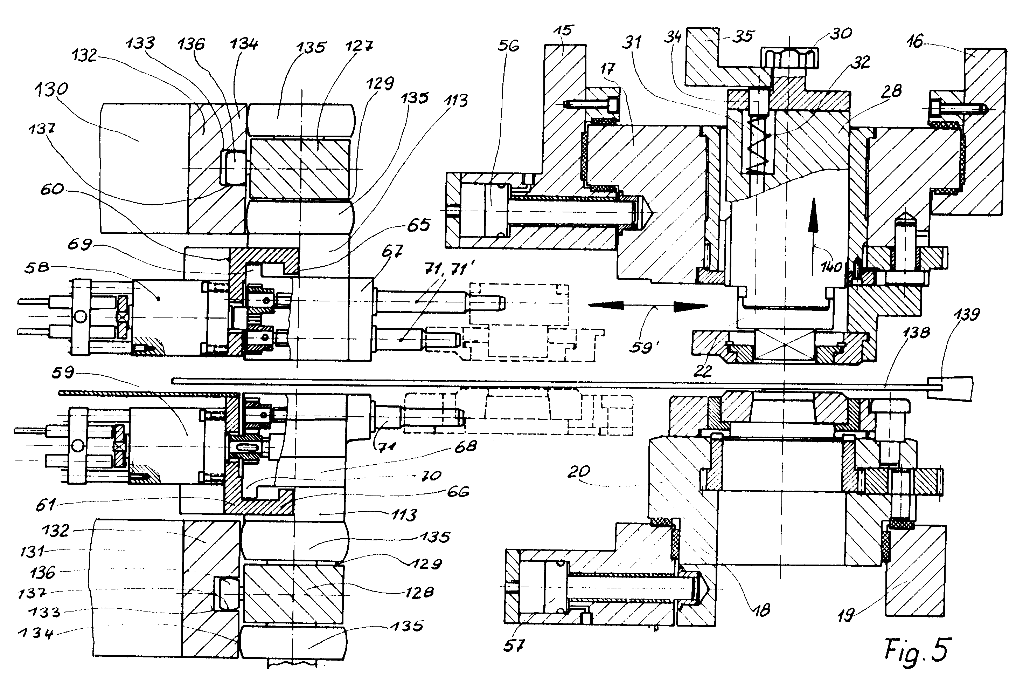

In Fig. 5 ist unter anderem die Führung der mit 127 und 128 bezeichneten jeweils oberen und unteren Kettenzüge des Werkzeugmagazins 9 erkennbar. Jedes Kettenglied 113 steht hierbei mit einem Fahrwerk 129 in fester Verbindung, wobei dem oberen Kettenzug 127 eine obere Führungskonstruktion 130 und dem unteren Kettenzug 128 eine untere Führungskonstruktion 131 zugeordnet ist. Jede der Führungskonstruktionen 130, 131 besteht aus einer am Grundkörper 2 angebrachten Führungsschiene 132, die auf ihrer, dem Fahrwerk 129 zugekehrten Seite mit einer Nut 133 versehen ist. Die im Querschnitt ungefähr rechteckige Nut befindet sich in einer sich ungefähr vertikal erstreckenden Fläche 134. Mit 135 sind Rollen des Fahrwerkes 129 bezeichnet, die auf der Fläche 134 abrollen und somit eine horizontale Führungsfunktion ausüben. Mit 136 sind Rollen bezeichnet, die auf einer sich im wesentlichen horizontal erstreckenden Seitenfläche 137 der Nut 133 abrollen und somit eine vertikale Führungsfunktion erfüllen.

Mit 138 ist ein Blech bezeichnet, welches mit einer Spannzange 139 des Koordinatentisches zur mechanischen Bearbeitung gehalten bzw. relativ zu dem Werkzeug positioniert wird.

Fig. 5 läßt im übrigen die Werkzeugwechselvorrichtungen 58 und 59 in ihrer Gesamtheit erkennen, und zwar in ihrer seitlichen Zuordnung zu den senkrecht zur Zeichenebene der Fig. 5 verschiebbaren Stanzblöcken 17, 20. Die obere Werkzeugwechselvorrichtung 58 ist grundsätzlich ähnlich aufgebaut wie die untere Werkzeugwechselvorrichtung 59. Es sind somit dem oberen Werkzeugträger jeweils paarweise Bolzen 71, 71' zugeordnet, von denen die Bolzen 71 um ihre Längsachse undrehbar, die Bolzen 71' hingegen um ihre Längsachse drehbar an dem jeweiligen Werkzeugträger 67, 68 gelagert sind. Der Antrieb der drehbaren Bolzen 71' erfolgt in identischer Weise wie bei den unteren Werkzeugträgern 68, so daß auf eine wiederholte Beschreibung verzichtet wird. Identisch im Vergleich zu den unteren Werkzeugträgern ist auch die Ausbildung des Endbereichs der Bolzen 71' und damit ihre Funktion bezüglich der zu handhabenden Werkzeuge. Es erfüllen somit die undrehbaren Bolzen 71 eine ausschließliche Tragefunktion, während die drehbaren Bolzen 71' zusätzlich zu der Tragefunktion auch eine Arretierungsfunktion übernehmen.

Da in der Stanzstation 4 eine Arretierung des Stempels 22 mittels des Arretierstiftes 31 erfolgt, dessen Kopfteil 34 in der Stanzstation durch das Adapterteil 73 entgegen der Kraft der Feder 32 niedergehalten wird, wohingegen diese Position des Arretierstiftes außerhalb der Stanzstation 4 teilweise durch die Stempelhalterleiste 35 übernommen wird, wird eine Lösung einer Arretierung dadurch ermöglicht, daß in den, einem Werkzeugwechsel zugeordneten Positionen entlang der Führungsschienen 15, 16 die Stempelhalterleiste 35 endet, so daß unter der Wirkung der Feder 32 der Arretierstift 31 in Richtung des Pfeiles 140 nach oben so weit angehoben wird, daß die Arretierung gelöst ist und nunmehr eine Entnahme des Stempels 22 aus dem Stempelhalter 28 in horizontaler Richtung, nämlich in Richtung der Pfeile 59' möglich ist.

Die Handhabung von Werkzeugen im Rahmen der Station 12, insbesondere das hier erfolgende Einsetzen kompletter Werkzeugsätze in das Werkzeugmagazin 9, nämlich dessen jeweils obere und untere Kettenzüge 127, 128 bzw. die Entnahme von Werkzeugsätzen erfolgt in identischer Weise wie der Werkzeugwechsel im Bereich der Stanzstation 4. Es wird aus diesen Gründen auf eine diesbezügliche wiederholte Beschreibung verzichtet.

Im folgenden wird kurz auf die Wirkungsweise der Stanzmaschine eingegangen.

Es wird hierbei davon ausgegangen, daß beide Werkzeugaufnahmen der Stanzblöcke 17, 20 mit jeweils einem kompletten Werkzeugsatz besetzt sind. Zu einem Werkzeugsatz zugehörig werden hierbei angesehen ein Stempel 22, ein Abstreifer 21 nebst Abstreiferring 25 sowie ein Matrizenschuh 23 nebst Aufnahmering 45 sowie Matrize 24. Zum Auswechseln des sich in der Stanzstation 4, somit im Arbeitseinsatz befindlichen Werkzeugsatzes mit dem anderen, sich in den Stanzblöcken 17, 20 befindlichen Werkzeugsatzes werden mittels Betätigung der Kolben-Zylinder-Einheit 118 die Stanzblöcke 17, 20 ausgehend von der in Fig. 4 gezeigten Stellung nach rechts verschoben, wodurch der in der linken Werkzeugaufnahme befindliche Werkzeugeinsatz nunmehr in die Stanzstation 4, somit zum Arbeitseinsatz gelangt. Während des mit dem in der Stanzstation 4 befindlichen Werkzeugsatzes ablaufenden Arbeitsprogramms wird im folgenden das andere, noch in den Stanzblöcken 17, 20 gehaltene Werkzeugsystem ausgewechselt in dem zunächst einmal die oberen und unteren Werkzeugmagazine 9 relativ zu der Stanzstation dahingehend verfahren werden, daß ein Leersystem von jeweils einem oberen Werkzeugträger 67 und einem unteren Werkzeugträger 68 den rechten Werkzeugwechselvorrichtungen (Fig.4) gegenüberliegt. Im folgenden werden durch Betätigung der Kolben-Zylinder-Einheiten 105 die Platten 60, 61 in Richtung auf die Werkzeugträger 67, 68 hin verfahren, wodurch sich gleichzeitig ein Eingriff zwischen den Ritzeln 64 der Drehzylinder 109 und den Zahnrädern 112 der Stifte 71' ergibt. Im folgenden wird der, sich in den Stanzblöcken befindliche Werkzeugsatz durch weiteres Verschieben der Platten 60, 61 sowie Betätigen der Drehzylinder 109 erfaßt und durch anschließendes Beaufschlagen der Kolben-Zylinder-Einheiten 105 aus den Stanzblöcken 17, 20 in Richtung der Pfeile 59' herausgezogen. Dieser herausgezogene Werkzeugsatz ist nunmehr in das Werkzeugmagazin 9 überführt worden. Nachdem durch weiteres Zurückziehen der Platten 60, 61 der formschlüssige Eingriff zwischen den Ritzeln 64 und den Zahnrädern 112 gelöst ist, wird durch Verfahren des Werkzeugmagazins 9 mittels des Antriebs 10 nunmehr ein weiterer, an das laufende Arbeitsprogramm angepaßter Werkzeugsatz in eine Position gegenüber dem zuletzt genannten Werkzeugwechselvorrichtungen verfahren. Der vorher vorhandene formschlüssige Eingriff zwischen den Nocken 69, 70 sowie den Mitnahmeteilen 65, 66 ist durch Verfahren des Werkzeugmagazins 9 gelöst worden, da dieser Formschluß lediglich in Verschieberichtung der Werkzeugträger 67, 68 wirksam ist. Im folgenden kann weiderum durch Betätigung der Werkzeugwechselvorrichtungen 58, 59 im oben bereits beschriebenen Sinne ein neuer Werkzeugsatz in die noch leere Aufnahme der Stanzblöcke 17, 20 überführt werden.

Der nächste Werkzeugwechsel des sich in der Stanzstation 4 befindlichen Werkzeugsatzes kann im folgenden durch bloßes Verschieben der Stanzblöcke 17, 20 durchgeführt werden, wobei der nunmehr aus der Stanzstation 4 herausgeschobene Werkzeugsatz nunmehr den einen Werkzeugwechselvorrichtungen (Fig.4) gegenüberliegend angeordnet ist und für einen Austausch im bereits beschriebenen Sinne zur Verfügung steht.

Der in dem Werkzeugmagazin 9 enthaltene Werkzeugbestand kann darüber hinaus über die Station 12 und den Transportwagen 13 in Verbindung mit einem weiteren, hier nicht mehr gezeigten Werkzeuglager laufend dem jeweiligen Arbeitsprogramm angepaßt werden. Man erkennt, daß der Werkzeugwechsel in der Stanzstation durch bloßes Verschieben der Stanzblöcke 17, 20 in kürzester Zeit durchgeführt werden kann und daß für die mechanische Bearbeitung ein sehr großes Werkzeugreservoir zur Verfügung steht, welches in Verbindung mit dem Transportwagen 13 somit einem äußeren Werkzeuglager beliebig groß gemacht werden kann. Es ist ferner erkennbar, daß der Raumbedarf sowie die Standfläche der erfindungsgemäßen Stanzmaschine trotz des Systems der Werkzeugmagazine 9 nur unwesentlich vergrößert wird, da die kettenartige Ausbildung dieses, unmittelbar der Stanzmaschine zugeordneten Werkzeugsystems eine beliebige räumliche Anpassung an deren sonstige Gestalt erlaubt.

**Patentansprüche**

1. Stanzmaschine, mit einer Arbeitsstation (4), in welcher ein Werkzeug zur mechanischen Bearbeitung plattenartiger Werkstücke mit einem Werkzeugantrieb kuppelbar ist,

   - mit einem kettenartigen, aus einzelnen, gelenkig miteinander in Verbindung stehenden Kettengliedern (113) gebildeten, umlaufend antreibbaren Werkzeugmagazin (9), welches zur Aufnahme einer Vielzahl von Werkzeugen eingerichtet ist,
   - wobei zumindest eine Werkzeugwechselvorrichtung (58,59) vorgesehen ist, die zur Entnahme von Werkzeugen aus dem Werkzeugmagazin (9) sowie zum Einsetzen in die Arbeitsstation (4) und umgekehrt ausgestaltet und angeordnet ist,
   - wobei die Arbeitsstation zwei Werkzeugaufnahmen umfaßt, die zwecks Antrieb des Werkzeugs wahlweise mit dem Werkzeugantrieb kuppelbar sind,
   - wobei die eine, nicht mit dem Werkzeugantrieb gekuppelte Werkzeugaufnahme zwecks Durchführung eines Werkzeugwechsels mit der wenigstens einen, in der Nähe der Arbeitsstation angeordneten Werkzeugwechselvorrichtung (58,59) in Verbindung bringbar ist,
   - wobei an jedem Kettenglied (113) ein Werkzeugträger (67,68) in Richtung auf die Arbeitsstation hin bzw. von dieser fort verschiebbar gehalten ist,
   - wobei jeder Werkzeugträger (67,68) Handhabungseinrichtungen zur Erfassung zumindest eines Werkzeuges trägt und daß der Antrieb der Werkzeugträger (67, 68) insbesondere der Handhabungseinrichtungen über die Werkzeugwechselvorrichtungen (58,59) erfolgt,

   - wobei die Werkzeugwechselvorrichtungen (58,59) stationär angeordnet sind,
   - wobei das Werkzeugmagazin (9) an der Werkzeugwechselvorrichtung mit geringem Abstand vorbeigeführt ist,
   - wobei die Werkzeugträger (67,68) mit den Werkzeugwechselvorrichtungen (58,59) durch Verfahren des Werkzeugmagazins (9) entlang seiner Umlaufbahn kuppelbar sind und
   - wobei die Werkzeugwechselvorrichtungen je einen Verschiebeantrieb zur Erzeugung einer auf die Arbeitsstation hin bzw. von dieser fort gerichteten geradlinigen Bewegung der Werkzeugträger (67,68) aufweisen
   - dadurch gekennzeichnet,
   - daß das Werkzeugmagazin (9) in einer Horizontalebene umlaufend angeordnet ist, wobei die Kontur des Umlaufs des Werkzeugmagazins (9) weitestgehend an die Kontur des Maschinengrundkörpers (2) der Stanzmaschine angepaßt ist, und
   - daß das Werkzeugmagazin (9) zumindest im Bereich der Arbeitsstation (4) auf einer dieser entsprechenden Höhe geführt ist.

2. Stanzmaschine nach Anspruch 1, dadurch gekennzeichnet,

   - daß die beiden Werkzeugaufnahmen durch zumindest einen, geradlinig motorisch verschiebbaren Schlitten gebildet werden,
   - daß der Schlitten Arretiereinrichtungen zur Fixierung des Werkzeugs in einer genau vorgegebbaren Position aufweist bzw. mit derartigen Arretiereinrichtungen zusammenwirkt,
   - daß die Arretiereinrichtungen durch die Bewegung des Schlittens entlang der diesem zugeordneten Führungsschienen (15,16,18,19) betätigbar sind,
   - daß im Bereich der Arbeitsstation und der Werkzeugwechseleinrichtungen (58,59) das Werkzeugmagazin (9) parallel zu dem Schlitten geführt ist,
   - daß der Schlitten in genau vorgebbaren Positionen arretierbar ist und daß in zumindest einer Position des Schlittens einer Werkzeugaufnahme eine Werkzeugwechselvorrichtung (58,59) mit Abstand gegenübersteht.

**3.** Stanzmaschine nach Anspruch 1 oder 2, dadurch gekennzeichnet, daß das Werkzeugmagazin (9) und/oder der Schlitten mit Arretiereinrichtungen ausgerüstet sind, durch welche diese Bauteile in definierten Positionen feststellbar sind.

**4.** Stanzmaschine nach einem der Ansprüche 1 bis 3, dadurch gekennzeichnet,
- daß die Werkzeugwechselvorrichtungen (58,59) jeweils einen Drehantrieb zur Ausübung von Verriegelungsfunktionen über die Handhabungseinrichtungen aufweisen,
- daß die Handhabungseinrichtungen jeweils einem Werkzeug zugeordnete Paare von Bolzen (71,71') sind, von denen der eine Bolzen (71') drehbar und der andere Bolzen (71) undrehbar an dem Werkzeugträger (67,68) gehalten ist,
- wobei der drehbar gehaltene Bolzen (71') mit dem Drehantieb der Werkzeugwechseleinrichtungen (58,59) kuppelbar ist und
- wobei die zu handhabenden Werkzeuge mit Bohrungen (123,124) zur Aufnahme der Bolzen (71,71') sowie mit Einrichtungen zur Arretierung des drehbaren Bolzens (71') gegenüber einem unbeabsichtigten Herausziehen aus der Bohrung ausgerüstet sind.

**5.** Stanzmaschine nach einem der Ansprüche 2 bis 4, dadurch gekennzeichnet,
- daß das Werkzeug ein Stanzwerkzeug ist, welches aus einem Ober- und Unterwerkzeug besteht,
- daß das Ober- und das Unterwerkzeug in voneinander getrennten Werkzeugaufnahmen gehalten sind,
- daß die voneinander getrennten Werkzeugaufnahmen in unabhängig voneinander geradlinig motorisch verschiebbaren Schlitten angeordnet sind,
- daß in der Arbeitsstation (4) zumindest eine obere (58) und eine untere Werkzeugwechselvorrichtung (59) angeordnet ist,
- daß das Werkzeugmagazin (9) in einen oberen (127) und einen unteren Kettenzug (128) unterteilt ist, wobei die Kettenzüge (127,128) vorzugsweise unabhängig voneinander in Umlaufrichtung antreibbar sind und
- daß an den Kettengliedern (113) der Kettenzüge (127,128) jeweils obere (67) und untere Werkzeugträger (68) in Richtung auf die Arbeitsstation (4) hin bzw. von dieser fort verschiebbar gehalten sind.

**6.** Stanzmaschine nach Anspruch 5, dadurch gekennzeichnet,
- daß das Werkzeug in der Arbeitsstation (4) in seiner an den Werkzeugantrieb angekuppelten Stellung mit einem Antriebssystem zur Drehung um seine Längsachse in Verbindung steht,
- daß die Verbindung zwischen diesem Antriebssystem und dem Werkzeug kuppelbar ausgebildet ist, wobei das Antriebssystem am Maschinengrundkörper (2) befestigt ist,
- daß in an sich bekannter Weise das Oberwerkzeug im wesentlichen aus einem Stempel (22) und einem Abstreifer (21) und das Unterwerkzeug im wesentlichen aus dem Matrizenschuh (23) und der Matrize (24) besteht,
- daß der Drehantrieb des Stempels (22) um seine Längsachse über einen Stempelhalter (28) und eine diese umgebende, in dem Schlitten drehbar gelagerte Buchse (37) erfolgt,
- daß der Drehantrieb der Matrize (24) über einen, in dem Matrizenschuh (23) drehbar gelagerten, die Matrize (24) umgebenden Aufnahmering (45) erfolgt, der an seiner Stirnseite mit einer, in dem Schlitten drehbar gelagerten Buchse (44) kuppelbar ist,
- daß die Buchsen (37,44) jeweils mit voneinander unabhängigen Antriebssystemen in Verbindung stehen und
- daß die Antriebssysteme aus gegenüber dem Maschinengrundkörper (2) schwenkbar angeordneten Motoren (89,101) bestehen, die mit Außenverzahnungen der Buchsen (37,44) kuppelbar sind.

**7.** Stanzmaschine nach einem der Ansprüche 2 bis 6, dadurch gekennzeichnet, daß die Schlitten im Querschnitt vorzugsweise T-förmig ausgebildet sind und über Gleitlagerungen in Führungsschienen (15,16,18, 19) gelagert sind.

**8.** Stanzmaschine nach einem der Ansprüche 1 bis 7, dadurch gekennzeichnet,
- daß das Werkzeugmagazin (9) mit einer, der Überführung von Werkzeugen aus diesem Werkzeugmagazin auf einen Transportwagen (13) und umgekehrt dienenden Station (12) zusammenwirkt,
- daß der Transportwagen (13) in Richtung auf ein weiteres Magazin hin bzw. umgekehrt verfahrbar ist,

- daß der Transportwagen (13) mit Einrichtungen zur automatischen Werkzeugübernahme ausgerüstet ist und
- daß die der Werkzeughandhabung dienenden Komponenten der Station (12) im wesentlichen den Werkzeugwechselvorrichtungen (58,59) entsprechen.

9. Stanzmaschine nach einem der Ansprüche 5 bis 8, dadurch gekennzeichnet,
   - daß jede Werkzeugaufnahme der Schlitten mit je einem Antriebssystem zur Drehung des Werkzeugs um seine Längsachse in Verbindung steht,
   - wobei die Antriebssysteme an dem Schlitten befestigt sind.

## Claims

1. Punch press having a work station (4) in which a tool for the mechanical treatment of plate-like workpieces can be coupled to a tool drive,
   - comprising a chain-like tool magazine (9) which is drivable in a circulatory manner and which is formed from individual chain links (113) which are connected to each other in an articulated manner, the magazine being set up to receive a plurality of tools,
   - wherein at least one tool exchange device (58,59) is provided which is constructed and arranged to extract tools from the tool magazine (9) and to insert them into the work station (4) and vice versa,
   - wherein the work station encompasses two tool receivers which for the purpose of driving the tool can be coupled selectively to the tool drive,
   - wherein the one tool receiver not coupled to the tool drive can be brought into connection with said at least one tool exchange device (58,59) which is arranged adjacent to the work station, for the purpose of carrying out a tool exchange,
   - wherein at each chain link (113) a tool holder (67,68) is mounted to be displaceable in the direction towards the work station and away from the work station,
   - wherein each tool holder (67,68) carries handling means for the manipulation of at least one tool, and wherein the drive of the tool holders (67,68), particularly of the handling means, is effected by means of the tool exchange devices (58,59),
   - wherein the tool exchange devices (58,59) are static,
   - wherein the tool magazine (9) is arranged to skirt the tool exchange devices with a small clearance,
   - wherein the tool holders (67,68) can be coupled to the tool exchange devices (58,59) by travel of the tool magazine (9) along its circulatory path, and
   - wherein the tool exchange devices each include a displacement drive to produce a linear movement of the tool holder (67,68) in the direction towards the work station and away from the work station,
   - characterised in that
   - the tool magazine (9) is arranged to circulate in a horizontal plane, with the contour of the path of the tool magazine (9) being matched as far as possible to the contour of the machine body (2) of the punch press,
   - and the tool magazine (9) is guided at least in the region of the work station (4) at a level corresponding to the work station.

2. Punch press according to claim 1, characterised in that,
   - the two tool receivers are formed by at least one carriage which is linearly displaceable by motorised means,
   - the carriage comprises arresting devices for the fixing of the tool in an accurately predetermined position and cooperates with such arresting devices,
   - the arresting devices are arranged to be actuated by the movement of the carriage along the associated guide rails (15,16,18,19),
   - the tool magazine (9) is guided parallel to the carriage in the region of the work station and of the tool exchange devices (58,59),
   - the carriage can be arrested in accurately predetermined positions and in at least one position of the carriage a tool receiver is positioned opposite and spaced from a tool exchange device (58,59).

3. Punch press according to claim 1 or 2, characterised in that the tool magazine (9) and/or the carriage are equipped with arresting devices by means of which these components can be held fast in defined positions.

4. Punch press according to one of claims 1 to 3, characterised in that,
   - the tool exchange devices (58,59) respectively include a rotary drive for the execution of locking functions by means of the handling means,

- the handling means are respective pairs of bolts (71,71') associated with a tool, of which the one bolt (71') is rotatable and the other bolt (71) is mounted non-rotatably on the tool holder (67,68),

- the rotatably mounted bolt (71') can be coupled to the rotary drive of the tool exchange devices (58,59), and

- the tools to be manipulated are equipped with bores (123,124) to receive the bolts (71,71') as well as with devices to prevent the rotatable bolt (71') from unintentional withdrawal from the bore.

5. Punch press according to one of claims 2 to 4, characterised in that,

- the tool is a punch tool which consists of an upper tool and lower tool,

- the upper tool and the lower tool are mounted in tool receivers which are separate from each other,

- the separate tool receivers are arranged on independent, linearly displaceable, motor-driven carriages,

- at least one upper tool exchange device (58) and at least one lower tool exchange device (59) are arranged in the work station (4),

- the tool magazine (9) is divided into an upper chain linkage (127) and a lower chain linkage (128), with the chain linkages (127,128) preferably being drivable in the circulatory direction independently of one another, and

- on the chain links (113) of the chain linkages (127,128) are mounted respective upper tool holders (67) and lower tool holders (68) which are displaceable in the direction towards the work station (4) and away from the work station.

6. Punch press according to claim 5, characterised in that

- the tool in the work station (4) in its position coupled to the tool drive is connected to a drive system for the rotation of the tool about its longitudinal axis,

- the connection between this drive system and the tool is such as to be couplable, with the drive system secured to the machine body (2),

- in a manner known per se the upper tool essentially comprises a punch (22) and a stripper (21) and the lower tool essentially comprises the die shoe (23) and the die (24),

- the rotary drive of the punch (22) about its longitudinal axis is effected by means of a punch holder (28) and a sleeve (37) which encircles the punch holder and is mounted rotatably in the carriage,

- the rotary drive of the die (24) is effected by means of a receiver ring (45) which is rotatably mounted in the die shoe (23), which encircles the die (24) and which can be coupled at its end face to a sleeve (44) which is mounted rotatably in the carriage,

- the sleeves (37,44) are respectively connected to independent drive systems, and

- the drive systems comprise motors (89,101) which are arranged to be pivotable relative to the machine body (2) and which can be coupled to external teeth on the sleeves (37,44).

7. Punch press according to one of claims 2 to 6, characterised in that the carriages are preferably T-shaped in cross-section and are mounted by means of sliding bearings on guide rails (15,16,18,19).

8. Punch press according to one of claims 1 to 7, characterised in that,

- the tool magazine (9) cooperates with a station (12) which serves to transfer tools from this tool magazine to a transport carriage (13) and vice versa,

- the transport carriage (13) is displaceable in the direction towards a further magazine or in the reverse sense,

- the transport carriage (13) is equipped with devices for automatic tool acceptance, and

- the components of the station (12) serving for the tool manipulation correspond substantially to the tool exchange devices (58,59).

9. Punch press according to one of claims 5 to 8, characterised in that,

- each tool receiver of the carriages is connected to a respective drive system for the rotation of the tool about its longitudinal axis,

- the drive systems are secured to the carriages.

## Revendications

1. Machine d'emboutissage comportant un poste d'usinage (4), dans laquelle un outil, pour l'usinage mécanique de pièces à usiner en plaques, peut être accouplé à un entraînement d'outil,

- comportant un magasin d'outillage (9) du type à chaîne, pouvant être entraîné en carrousel et formé de maillons de chaîne (113) individuels, reliés entre eux par articulations, et qui peut être installé pour recevoir un grand nombre d'outils,
- étant entendu qu'il est prévu au moins un dispositif d'échange des outils (58, 59), qui est réalisé et disposé pour prendre des outils dans le magasin d'outillage (9) ainsi que pour les installer dans le poste d'usinage (4), et inversement,
- étant entendu que le poste d'usinage comporte deux raccordements d'outil, que l'on peut coupler, à volonté, avec l'entraînement d'outil pour entraîner l'outil,
- étant entendu que l'un des raccordements d'outil, non couplé à l'entraînement des outils, peut, pour effectuer un changement d'outil, être raccordé avec au moins l'un des dispositifs d'échange d'outils (58, 59), qui est disposé au voisinage du poste d'usinage,
- étant entendu que, sur chaque maillon de chaîne (113), un porte-outil (67, 68) est fixé de façon à pouvoir se déplacer vers le poste d'usinage, ou se déplacer depuis celui-ci.
- étant entendu que chaque porte-outil (67, 68) porte des dispositifs de manutention pour saisir au moins un outil et que l'entraînement des porte-outil (67, 68), en particulier des dispositifs de manutention, se fait par l'intermédiaire des dispositifs d'échange des outils (58, 59),
- étant entendu que les dispositifs d'échange des outils (58, 59) sont disposés de façon à être stationnaires,
- étant entendu que le magasin d'outillage (9) est guidé contre le dispositif d'échange des outils, à une faible distance de celui-ci,
- étant entendu que les porte-outil (67, 68) peuvent être accouplés avec les dispositifs d'échange des outils (58, 59) par déport du magasin d'outillage (9) le long de sa piste de circulation,
- étant entendu que les dispositifs d'échange des outils présentent chacun un entraînement de déplacement, pour réaliser un mouvement des porte-outil (67, 68) en ligne droite, dirigé vers le poste d'usinage ou s'en éloignant, caractérisée

- en ce que le magasin d'outils (9) est disposé en carrousel, dans un plan horizontal, étant entendu que le contour de la piste du magasin d'outillage (9) est ajusté le plus largement possible au contour du corps de bâti de la machine d'emboutissage.

2. Machine d'emboutissage suivant la revendication 1, caractérisée
   - en ce que les deux raccordements d'outil sont formés d'au moins un chariot pouvant se déplacer en ligne droite sous l'action d'un moteur,
   - en ce que le chariot présente des dispositifs de blocage pour fixer l'outil dans une position déterminée avec précision à l'avance, et combine son action avec de tels dispositifs de blocage,
   - en ce que les dispositifs de blocage peuvent être actionnés par le mouvement du chariot le long des rails de guidage (15, 16, 18, 19) qui lui sont associés,
   - en ce que, dans la zone du poste d'usinage et des dispositifs d'échange des outils (58, 59), le magasin d'outillage (9) est guidé parallèlement au chariot,
   - en ce que le chariot peut être bloqué dans une position programmée de façon précise, et en ce que, dans au moins une position du chariot, un dispositif d'échange des outils (58, 59) se trouve à une certaine distance, en face d'un raccordement d'outil.

3. Machine d'emboutissage suivant la revendication 1 ou la revendication 2, caractérisée en ce que le magasin d'outillage (9) et/ou le chariot sont équipés de dispositifs de blocage, avec lesquels on peut immobiliser ces pièces constitutives dans des positions définies.

4. Machine d'emboutissage suivant l'une quelconque des revendications 1 à 3, caractérisée
   - en ce que chacun des dispositifs d'échange des outils (58, 59) concerné présentent un entraînement de rotation, pour exercer des fonctions de verrouillage par l'intermédiaire de dispositifs de manutention,
   - en ce que les dispositifs de manutention sont chacun des paires de broches (71, 71') associées chaque fois à un outil, l'une (71') de ces broches étant maintenue tournante sur le porte-outil (67, 68) et l'autre (71) non tournante,
   - étant entendu que la broche (71') maintenue tournante peut être accouplée à l'entraînement de rotation des dispositifs d'échange des outils (58, 59), et

- étant entendu que les outils à manutentionner sont munis d'alésages (123, 124) pour saisir les broches (71, 71'), ainsi que de dispositifs de blocage de la broche tournante (71') pour l'empêcher de sortir intempestivement de l'alésage.

5. Machine d'emboutissage suivant l'une quelconque des revendications 2 à 4, caractérisée

- en ce que l'outil est un outil d'emboutissage, constitué d'un outil supérieur et d'un outil inférieur,
- en ce que l'outil supérieur et l'outil inférieur sont maintenus dans des dispositifs de réception d'outil qui sont séparés l'un de l'autre,
- en ce que les dispositifs de réception d'outil, séparés l'un de l'autre, sont disposés dans des chariots motorisés pouvant se déplacer en ligne droite indépendamment l'un de l'autre,
- en ce que, dans le poste d'usinage (4), sont disposés au moins un dispositif d'échange d'outil supérieur (58) et un dispositif d'échange d'outil inférieur (59).
- en ce que le magasin d'outillage (9) est divisé en un élément de chaîne supérieur (127) et un élément de chaîne inférieur (128), les éléments de chaîne (127, 128) pouvant être entraînés, de préférence, dans le sens de circulation, indépendamment l'un de l'autre, et
- en ce que, sur les maillons (113) des éléments de chaîne (127, 128), sont chaque fois maintenus des porte-outil supérieur (67) et inférieur (68), pouvant se déplacer vers le poste d'usinage (4), ou s'en éloigner.

6. Machine d'emboutissage suivant la revendication 5, caractérisée

- en ce que l'outil dans le poste d'usinage (4), dans sa position accouplé à l'entraînement d'outil, est relié à un système d'entraînement pour tourner autour de son axe longitudinal,
- en ce que la liaison entre ce système d'entraînement et l'outil est réalisée avec possibilité d'accouplement, le système d'entraînement étant fixé sur le corps de bâti de la machine (2),
- en ce que, d'une façon connue en elle même, l'outil supérieur est essentiellement constitué d'un poinçon (22) et d'un dévêtisseur (21), et que l'outil inférieur est essentiellement constitué d'un sabot de matrice (23) et de la matrice (24) proprement dite,

- en ce que l'entraînement en rotation du poinçon (22) autour de son axe longitudinal se fait par l'intermédiaire d'un support de poinçon (28) et d'une douille (37) entourant ce dernier et montée tournante dans le chariot,
- en ce que l'entraînement en rotation de la matrice (24) se fait par l'intermédiaire d'une bague de maintien (45) entourant la matrice (24) et montée tournante dans le sabot de matrice (23), cette bague pouvant, sur sa face frontale, être accouplée à une douille (44) montée tournante dans le chariot,
- en ce que les douilles (37, 44) sont chacune raccordées à des systèmes d'entraînement indépendants l'un de l'autre, et
- en ce que les systèmes d'entraînement sont constitués par des moteurs (89, 101) disposés de façon à pouvoir pivoter par rapport au corps de bâti de la machine (2) et qui peuvent être accouplés avec les dentures extérieures des douilles (37, 44).

7. Machine d'emboutissage suivant l'une quelconque des revendications 2 à 6, caractérisée en ce que les chariots sont réalisés de préférence avec une section en forme de T, et sont montés dans des rails de guidage (15, 16, 18, 19) par l'intermédiaire de paliers lisses.

8. Machine d'emboutissage suivant l'une quelconque des revendications 1 à 7, caractérisée

- en ce que le magasin d'outillage (9) agit en combinaison avec un poste (12) servant à faire passer des outils de ce magasin d'outillage sur un chariot de transport (13), et inversement,
- en ce que l'on peut faire déplacer le chariot de transport (13) vers un autre magasin, et inversement,
- en ce que le chariot de transport (13) est équipé de dispositifs pour prendre des outils automatiquement en charge, et
- en ce que les composants du poste (12) servant à la manipulation des outils correspondent essentiellement aux dispositifs d'échange des outils (58, 59).

9. Machine d'emboutissage suivant l'une quelconque des revendications 5 à 8, caractérisée

- en ce que chaque raccordement d'outil des chariots est raccordé avec, chaque fois, un système d'entraînement pour la rotation de l'outil autour de son axe longitudinal,
- étant entendu que les systèmes d'entraînement sont fixés sur le chariot.

Fig. 1

EP 0 276 391 B1

17

Fig. 2

EP 0 276 391 B1

Fig. 3

EP 0 276 391 B1

Fig. 4

20

Fig. 5